# EUROPEAN PATENT SPECIFICATION

(11) **EP 4 357 256 B1**
(45) Date of publication and mention of the grant of the patent: **03.12.2025**
(21) Application number: 23204389.3
(22) Date of filing: 18.10.2023
(51) Int. Cl.: B65B 9/20, B29C 65/74, B65B 51/30, B65B 61/28

(54) **PACKAGE FORMING APPARATUS FOR A PACKAGING MACHINE AND PACKAGING MACHINE FOR FORMING PACKAGES FILLED WITH A POURABLE PRODUCT**
VERPACKUNGSMASCHINE UND VERPACKUNGSMASCHINE ZUM FORMEN VON MIT EINEM FLIESSFÄHIGEN PRODUKT GEFÜLLTEN VERPACKUNGEN
APPAREIL DE FORMATION D'EMBALLAGES POUR UNE MACHINE D'EMBALLAGE ET MACHINE D'EMBALLAGE POUR FORMER DES EMBALLAGES REMPLIS D'UN PRODUIT VERSABLE

(30) Priority: 21.10.2022 IT 202200021771
(43) Date of publication of application: 24.04.2024
(73) Proprietor: Tetra Laval Holdings & Finance S.A., 1009 Pully (CH)
(72) Inventor: USAI, Luca, 41123 Modena (IT); TEDALDI, Paolo Maria, 41123 Modena (IT); MOGAVERO, Carmine, 41123 Modena (IT)
(74) Representative: Tetra Pak Patent Attorneys

(56) References cited:
- EP-A1- 1 666 362
- EP-A1- 3 437 841
- EP-A1- 3 632 825

## Description

### TECHNICAL FIELD

The present invention relates to a package forming apparatus for a packaging machine for forming packages filled with a pourable product, preferentially a pourable food product.

Advantageously, the present invention also relates to a packaging machine for forming packages filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming unit of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilizing apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming unit adapted to form, transversally seal and cut individual packages from the tube of packaging material.

The package forming unit comprises a plurality of operative devices, each having one respective first operative group and one respective second operative group and a conveying unit configured to advance each first operative group and each second operative group along respective advancement paths. Moreover, each first operative group and the respective second operative group are configured to form and shape the tube in cooperation with one another when advancing in alignment with the tube and along respective active portions of the respective advancement paths.

Each operative group comprises a respective sealing device configured to transversally seal the tube along a respective transversal sealing band and a cutting element configured to transversally cut the tube at the respective sealing band.

Each cutting element is placed within a housing seat, which is either defined by the respective first operative group or the respective second operative group.

Additionally, each cutting element is moveable between a retracted position and an extracted position. Movement from the retracted position to the extracted position allows to execute the cutting action and movement from the extracted position back to the retracted position guarantees that the cutting elements is newly arranged within the housing seat.

A known packaging machine is disclosed, as an example, in EP 3 437 841 A1.

Even though the known packaging machines work satisfactorily well, a desire is felt in the sector to further improve the known packaging machines.

### DISCLOSURE OF INVENTION

It is therefore an object of the present invention to provide an improved package forming apparatus.

Additionally, it is an object of the present invention to provide an improved packaging machine.

According to the present invention, there is provided a package forming apparatus as claimed in claim 1.

Preferred non-limiting embodiments of the package forming apparatus are claimed in the claims being directly or indirectly dependent on claim 1.

According to the present invention, there is also provided a packaging machine according to claim 14 or 15.

### BRIEF DESCRIPTION OF THE DRAWINGS

Two non-limiting embodiments of the present invention will be described by way of example with reference to the accompanying drawings, in which:
Figure 1 is a schematic view of a packaging machine having a package forming apparatus according to the present invention, with parts removed for clarity;
Figure 2 is a schematic perspective view of a detail of the package forming apparatus of Figure 1, with parts removed for clarity;
Figures 3a and 3b are perspective views of a detail of the package forming apparatus of Figure 1 according to a first embodiment of the invention and when being in two different configurations, with parts removed for clarity;
Figure 4 is a partially exploded view of a portion of the detail of Figure 3a and 3b, with parts removed for clarity;
Figure 5 is a perspective schematic view of parts of the detail of Figure 4, with parts removed for clarity; and
Figure 6 is a section view of a detail of the package forming apparatus of Figure 1 according to a second embodiment of the present invention, with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar etc.

In more detail, packaging machine 1 may be configured to produce packages 2 from a multilayer packaging material. Preferentially, a multilayer packaging material having heat seal properties (i.e. portions of the multilayer packaging material can be sealed to one another).

In further detail, the multilayer packaging material may comprise at least one layer of fibrous material, such as e.g. a paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of the heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Furthermore, packaging machine 1 may be configured to produce packages 2 by forming a tube 4 from web 3, longitudinally sealing tube 4, filling tube 4 with the pourable product and to transversally seal and cut tube 4.

According to some possible non-limiting embodiments, each package 2 may extend along a longitudinal axis A.

According to some possible embodiments, each package 2 may comprise at least a first transversal sealing band 5, and preferentially also a second transversal sealing band arranged at opposite ends of package 2.

Preferentially, each first transversal sealing band 5 may be substantially spaced apart from the respective second transversal sealing band along the respective longitudinal axis A.

Preferentially, each first transversal sealing band 5 may define a top transversal sealing band and each second transversal sealing band may define a bottom transversal sealing band.

Moreover, each package 2 may also comprise a longitudinal seam portion 6. Preferentially, each first transversal sealing band 5 and/or each second transversal sealing band may be transversal, preferentially perpendicular, to the respective longitudinal seam portion 6.

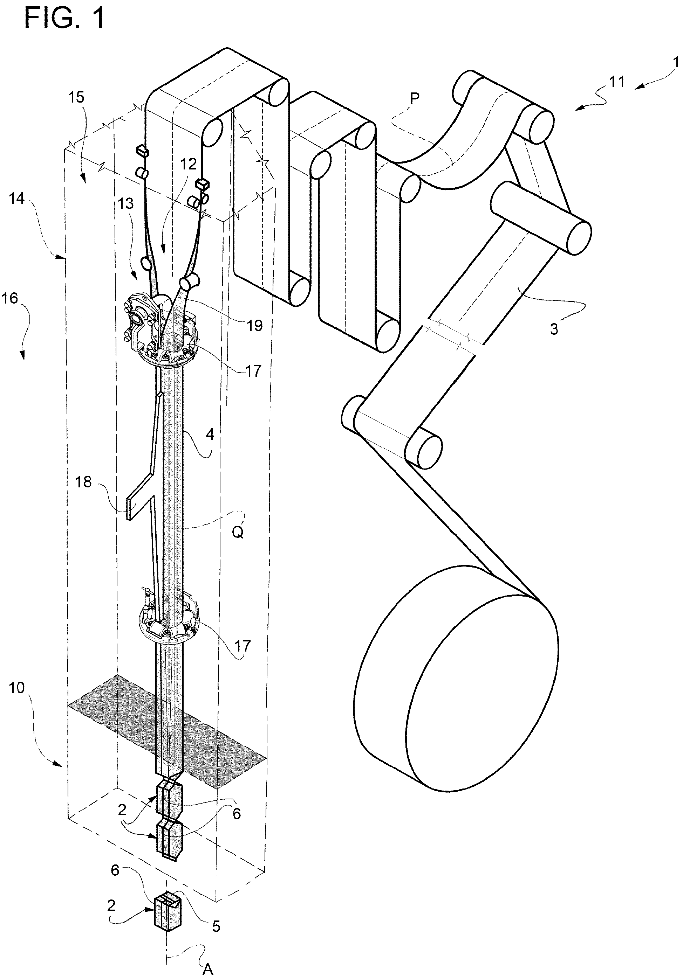

With particular reference to Figure 1, packaging machine 1 may comprise a package forming apparatus 10 configured to transversally seal and to transversally cut tube 4 for obtaining packages 2. Preferentially, package forming apparatus 10 may also be configured to form tube 4.

Moreover, packaging machine 1 may also comprise:
- a conveying device 11 configured to advance web 3 along a web advancement path P, preferentially to a tube forming station, at which, in use, web 3 is formed into tube 4, and configured to advance tube 4 along a tube advancement path Q;
- a tube forming and sealing device 12 configured to fold tube 4 from the, in use, advancing web 3 and to longitudinally seal tube 4; and
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and being configured to fold and longitudinally seal tube 4 within isolation chamber 14, in particular inner environment 15.

Moreover, packaging machine 1 may also comprise a sterilizing unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along a tube advancement path Q, preferentially from tube forming and sealing device 12 to package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 may have a vertical orientation.

More specifically, tube forming and sealing device 12 may comprise at least two forming ring assemblies 17, preferentially arranged within isolation chamber 14, even more preferentially arranged within inner environment 15, being configured to gradually fold in cooperation with one another web 3 into tube 4, preferentially by overlapping the edges of web 3 with one another. Thereby, in use, seam portion 6 of tube 4 may be formed.

Additionally, tube forming and sealing device 12 may comprise a sealing head 18, preferentially arranged within isolation chamber 14, even more preferentially within inner environment 15, and configured to longitudinally seal tube 4, preferentially along longitudinal seam portion 6.

Moreover, tube forming and sealing device 12 may also comprise a pressure assembly configured to exert a mechanical force on longitudinal seam portion 6 so as to ensure sealing of tube 4 along longitudinal seam portion 6.

Preferentially, filling device 13 may comprise a filling pipe 19 being configured to direct, in use, the pourable product into tube 4. Preferentially, filling pipe 19 may, in use, be at least partially placed within tube 4 for feeding, in use, the pourable product into tube 4.

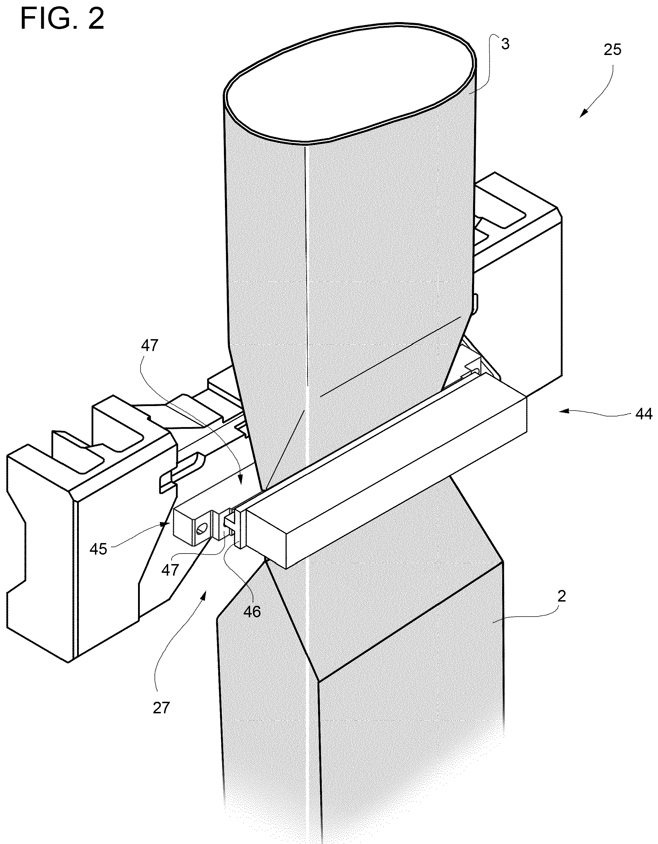

With particular reference to Figures 1 and 2, package forming apparatus 10 may comprise one or more, preferentially a plurality of, operative devices 25 (only partially shown to the extent necessary for the comprehension of the present invention), each one configured to at least transversally seal and to transversally cut tube 4, and preferentially to form (shape) tube 4.

Moreover, package forming apparatus 10 may also comprise a conveying unit (not shown) configured to advance operative devices 25.

Preferentially, package forming apparatus 10 may be configured to control operative devices 25 and the conveying unit such to transversally seal and cut tube 4 along equally spaced transversal cross sections, preferentially thereby forming the respective first transversal sealing bands 5 and/or the respective second transversal sealing bands.

With particular reference to Figures 2 to 6, each operative device 25 may comprise at least one cutting assembly 26 configured to transversally cut tube 4, and preferentially at least one sealing assembly 27 configured to transversally seal tube 4, even more preferentially thereby forming a respective transversal main sealing band.

Preferentially, each cutting assembly 26 may be configured to transversally cut tube 4 after sealing of tube 4 by means of the respective sealing assembly 27.

Even more preferentially, each cutting assembly 26 may be configured to cut the respective transversal main sealing band, preferentially thereby forming one respective first transversal sealing band 5 and one respective second transversal sealing band. In other words, each transversal main sealing band comprises one respective first transversal sealing band 5 and one respective second transversal sealing band. More in particular, each transversal main sealing band may comprise one respective first transversal sealing band 5 of a first package 2 and one respective second transversal sealing band of a second package 2, the second package 2 being arranged downstream of the first package 2 along tube advancement path Q.

In further detail, each second transversal sealing band obtained after cutting by means of cutting assembly 26 may be part of a leading package 2 (with respect to tube advancement path Q) and each first transversal sealing band 5 may be part of a trailing package 2 (with respect to tube advancement path Q). In even further detail, after the execution of the cutting operation by means of the respective cutting assembly 26, the leading package 2 having the respective second transversal sealing band may be separated from tube 4, while the respective trailing package 2 having the respective first transversal sealing band 5 may be still attached to tube 4 (in particular, the respective trailing package 2 defines the end of tube 4 and defines (i.e. becomes) then a new leading package 2).

According to some preferred non-limiting embodiments, each operative device 25 may also comprise a forming shell assembly configured to form tube 4, preferentially to at least partially define the shape of packages 2.

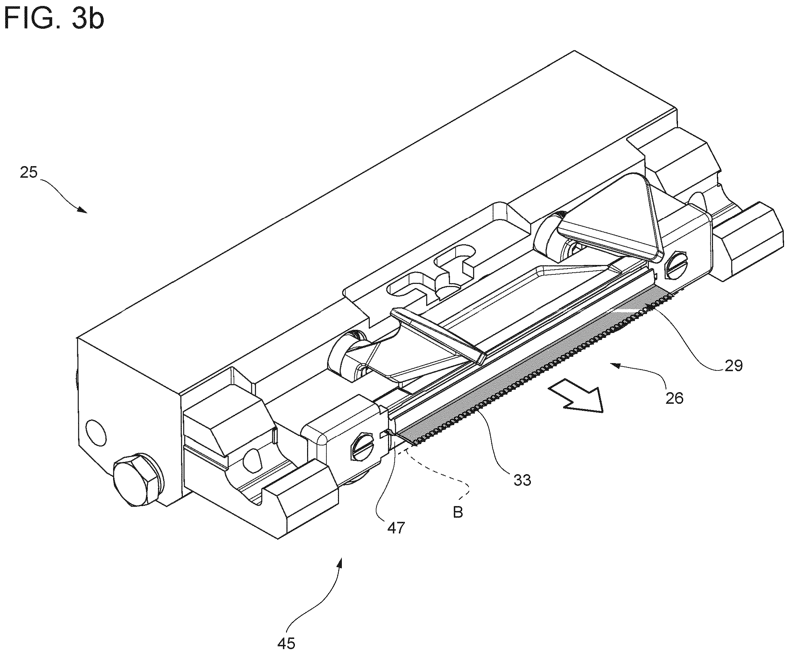

With particular reference to Figures 3b to 5, each cutting assembly 26 may comprise a cutting element 29, e.g. a blade, configured to transversally cut tube 4, preferentially along the respective transversal main sealing band.

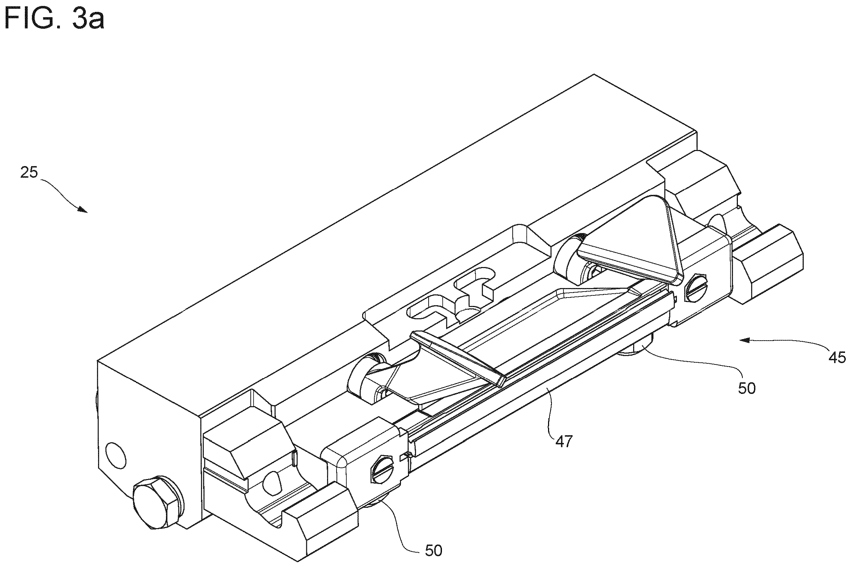

In more detail, each cutting element 29 may be moveable between a respective retracted position (see Figure 3a) and a respective extracted position (see Figure 3b).

Moreover, in use, each cutting element 29 moves from the respective retracted position to the respective extracted position for transversally cutting tube 4, preferentially the respective transversal main sealing band, and back from the respective extracted position to the respective retracted position so as to retract cutting element 29 from tube 4.

Preferentially, each cutting element 29 is configured to be controllable in the respective retracted position so as to avoid undesired interactions of cutting element 29 with tube 4, in particular as such undesired interactions may lead to damaging of tube 4.

According to some preferred non-limiting embodiments, each operative device 25 may comprise a respective housing seat 30 for the respective cutting element 29. Preferentially, each cutting element 29 may be fully arranged within the respective housing seat 30 when being in the respective retracted position and may at least partially extend from the respective housing seat 30 when being in the respective extracted position.

In particular, by fully arranging each cutting element 29 within the respective housing seat 30 when being in the respective retracted position one guarantees that cutting element 29 cannot interact with tube 4 in an undesired manner.

According to some possible non-limiting embodiments, packaging machine 1, preferentially package forming apparatus 10, may comprise a control unit configured to control operation of at least package forming apparatus 10.

Advantageously, packaging machine 1 may further comprises at least one sensor device 31 configured to detect at least one position of at least one surface 32 of each cutting element 29 and/or to measure the relative distance of the at least one surface 32 with respect to the at least one sensor device 31, in particular with respect to one reference portion of sensor device 31.

Preferentially, the control unit may be operatively connected to each sensor device 31. Even more preferentially, the control unit may be configured to receive the detection and/or measurement results from each sensor device 31.

Advantageously, each sensor device 31 and/or the control unit may be configured to determine whether the respective cutting element 29 is, in use, in the retracted position (or not) in dependence of the detected at least one position and/or the measured relative distance.

Preferentially, each operative device 25 may comprise one respective sensor device 31 configured to measure the relative distance of at least one respective surface 32 of each cutting element 29 with respect to the at least one sensor device 31, in particular the respective reference portion.

Alternatively, or in addition, each sensor device 31 may be configured to detect at least one position of the at least one respective surface 32.

Preferentially, the at least one position corresponds to the retracted position of cutting element 29.

According to this embodiment, the sensor 31 may be a kind of sensor that is capable of determining whether the at least one surface 32 is in the at least one position, or not, and therefore capable of determining whether the cutting element 29 is in the retracted position or not.

Advantageously, each sensor device 31 and/or the control unit may be configured to determine whether the respective cutting element 29 is and/or has returned in the retracted position (or not) in dependence of the measured relative distance and/or the detected at least one position.

In particular, in use, the respective at least one surface 32 of each cutting assembly 26 moves together with the respective cutting element 29 during movement of the respective cutting element 29 between the respective retracted position and the respective extracted position. Accordingly, the relative position of the respective surface 32 with respect to the sensor device 31 corresponds to, and is a measure of, the relative position of the respective cutting element 29 with respect to the sensor device 31.

More specifically, each sensor device 31 may be configured to determine the relative distance from the respective surface 32 after, preferentially also during, movement of the respective cutting element 29 from the respective extracted position to the respective retracted position.

The Applicant has found that determining whether a cutting element 29 has returned to the respective retracted position allows to monitor if any undesired interaction of the respective cutting element 29 with tube 4 has occurred.

According to some preferred non-limiting embodiments, each sensor device 31 and/or the control unit may be configured to determine whether each cutting element 29 reaches the respective retracted position during its movement from the respective extracted position to the respective retracted position.

Moreover, the control unit may be configured to issue an alarm signal, e.g. a visual and/or audio signal and/or a text message, and/or to interrupt the operation of packaging machine 1 and/or of at least package forming apparatus 10 if one or more sensor devices 31 and/or the control unit determine, in use, that one or more cutting elements 29 have not reached the respective retracted position during its/their movement from the respective extracted position to the respective retracted position.

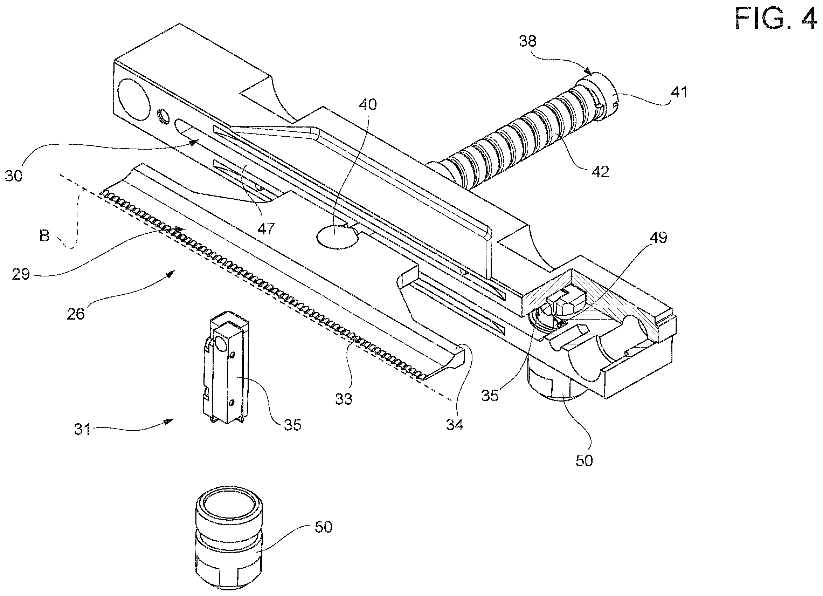

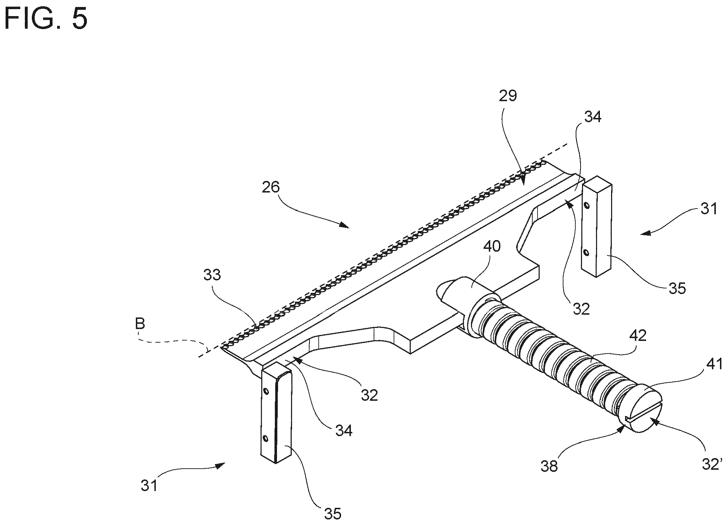

With particular reference to Figures 4 and 5, each cutting element 29 may comprise at least a cutting edge 33 configured to transversally cut tube 4, preferentially along the respective transversal main sealing band. In other words, in use, each cutting edge 33 engages and penetrates through tube 4, preferentially the respective transversal main sealing band, so as to cut tube 4, preferentially the respective transversal main sealing band.

Additionally, each cutting element 29 may also comprise an auxiliary edge 34 opposite to the respective cutting edge 33.

Moreover, each cutting element 29 may extend along a main axis B. Preferentially, each cutting element 33 may extend parallel to the respective main axis B.

According to the specific embodiment shown in Figures 3a to 5, each auxiliary edge 34 may comprise at least one surface 32 and the respective sensor device 31 may be configured to measure the relative distance from the at least one surface 32 of the respective auxiliary edge 34, and/or to detect the at least one position of the at least one surface 32.

Preferentially, each auxiliary edge 34 may comprise two respective surfaces 32 spaced apart from one another along a direction parallel to the respective main axis B.

Moreover, each sensor device 31 may be configured to measure the relative distance from more than one respective surface 32 of the respective cutting assembly 26, preferentially of the respective cutting element 29, more preferentially of the respective auxiliary edge 34, and each sensor device 31 and/or the control unit may be configured to determine, in use, whether the respective cutting element 29 is in the retracted position based on the relative distances from both surface 32.

Alternatively, or in addition, each sensor device 31 may be configured to detect the at least one position of more than one respective surface 32.

Additionally and according to some possible non-limiting embodiments, each sensor device 31 may be configured to determine an orientation of the respective cutting element 29 and/or the respective cutting edge 33 and/or the respective main axis B, e.g. with respect to tube 4 and/or the respective housing seat 30 and/or the respective sealing assembly 27, based on the relative distances of sensor device 31 to the two respective surfaces 32.

According to some preferred non-limiting embodiments, each sensor device 31 may comprise at least one sensor 35 configured to measure the relative distance from one respective surface 32.

Alternatively, or in addition, the at least one sensor 35 is configured to detect the at least one position of one respective surface 32.

Preferentially and according to the embodiment of Figures 3a to 5, each sensor device 31 may comprise two sensors 35, preferentially spaced apart along a direction parallel to the respective main axis B, and each one configured to measure the relative distance from one respective surface 32 of the respective cutting assembly 26, preferentially of the respective cutting element 29, even more preferentially of the respective auxiliary edge 34, with the respective surfaces 32 being different from one another, preferentially being spaced apart from one another along a direction parallel to the respective main axis B.

Alternatively, or in addition, each of the two sensors 35 is configured to detect the at least one position of one respective surface 32.

Preferentially, each sensor device 31 and/or the control unit may be configured to determine, in use, whether the respective cutting element 29 is in and/or has returned to the respective retracted position based on the relative distance determined by each of the at least two sensors 35 and/or based on the at least one position detected by each of the at least two sensors 35.

Additionally, each sensor device 31 and/or the control unit may be configured to determine an orientation of the respective cutting element 29, preferentially the respective cutting edge 33, based on the relative distances determined by the at least two sensors 35.

Preferentially, the orientation of each cutting element 29 should be according to a desired orientation (i.e. the respective main axis B has a desired orientation) meaning that each portion of cutting element 29 hits the respective main sealing band simultaneously with respect to the other portions. If the orientation deviates from the desired orientation, there may be portions of the respective cutting element 29 that hit the respective main sealing band at different times.

Moreover, in the case of the respective cutting element 29 having the desired orientation, the two relative distances equal one another. In the case that the orientation deviates from the desired orientation, the relative distances differ from one another.

In other words, a difference in the distance measured by one sensor 35 and the distance measured by the other sensor 35 may indicate that the cutting element 29 is not arranged according to the desired orientation, which may negatively affect the quality of the cutting operation.

According to some possible embodiments, each sensor 35 may be chosen from a group including proximity sensors, capacity proximity sensors, photoelectric proximity sensors, inductive proximity sensors, magnetic proximity sensors, proximity sensors based on the Doppler effect, ultrasonic sensors and Hall effect sensors, optical fiber sensors and others.

According to some possible embodiments, each sensor 35 may be an analog sensor or a digital sensor. In particular, analog sensors may be configured to provide a continuous signal depending on the specific relative position, i.e. the relative specific distance, of the respective cutting element 29 and digital sensors may be configured to provide a discrete signal, namely indicating whether the respective cutting element 29 is in the retracted position or not.

With particular reference to Figures 4 and 5, each cutting assembly 26 may also comprise a bar 38 fixed, preferentially integrally connected, to the respective cutting element 29, preferentially at the respective auxiliary edge 34.

Preferentially, each bar 38 may be fixed to the respective cutting element 29 such that any movement of the respective cutting element 29 results also in a movement of the respective bar 38, and vice versa.

Moreover, each operative device 25 may comprise a respective auxiliary seat 39 and the respective bar 38 may be moveably arranged within the respective auxiliary seat 39.

More specifically, each bar 38 may comprise a first end 40 fixed to, preferentially integral to, the respective cutting element 29 and a second end 41 opposite to first end 40.

Preferentially, each cutting assembly 26 may also comprise a respective spring element 42 configured to exert a retraction force onto bar 39 with the respective cutting element 29 being positioned in the respective extracted position.

More specifically, each spring element 42 may surround and may be coupled to the respective bar 39 and may abut against at least one abutment surface 43 of the respective operative device 25.

In further detail and with particular reference to Figure 2, each operative device 25 may comprise at least a first operative group 44 and a second operative group 45 configured to cooperate with the respective first operative group 44 so as to at least transversally seal and cut, preferentially to also at least partially form, tube 4.

Preferentially, one of the respective first operative group 44 and the respective second operative group 45 of each operative device 25 may comprise and/or carry the respective cutting element 29.

According to some preferred non-limiting embodiments, the conveying unit may be configured to advance first operative portions 44 along a first (endless) advancement path and second operative portions 45 along a second (endless) advancement path.

Moreover, each first operative portion 44 and the respective second operative portion 45 may be configured to cooperate with one another for forming a package 2 when advancing along a respective operative section of the first path and the second path, respectively.

Additionally, each one of the first advancement path and the second advancement path may also comprise a respective return section, which allows to return first operative portions 44 and second operative portions 44 back to the respective operative section.

With particular reference to Figure 2, each sealing assembly 27 may comprise a sealing element 46 and a counter-sealing element 47 configured to seal in cooperation tube 4, preferentially for creating the respective transversal main sealing band.

More specifically, each sealing element 46 and the respective counter-sealing element 47 may be configured to at least transversally compress, in particular flat-lay and squeeze, and to transversally seal tube 4, in particular during advancement of tube 4 along tube advancement path Q and a portion of tube 4 interposed between two respective packages 2.

Moreover, each sealing element 46 and the respective counter-sealing element 47 may be configured to engage tube 4 from opposite sides thereof.

In further detail, each sealing element 46 may comprise a source configured to generate the energy needed to obtain the sealing effect. For example, sealing element 46 may be a sonotrode having ultrasound-emitters or sealing element 46 may have an induction source.

Each counter-sealing element 47 may be a passive element (i.e. not having an active source). For example counter-sealing element 47 may be a metal anvil or a deformable pad.

According to some preferred non-limiting embodiments, each first operative group 44 may comprise the respective sealing element 46 and the respective second operative group 45 may comprise the respective counter-sealing element 47.

According to some possible non-limiting embodiments, each second operative group 45 may comprise the respective cutting element 29.

According to some possible non-limiting embodiments, each counter-sealing element 47 may comprise the respective cutting element 29.

According to some possible non-limiting embodiments, each sealing element 46 may comprise a groove configured to receive a portion of the respective cutting element 29, preferentially at least the respective cutting edge 33, with the respective cutting element 29 being in the respective extracted position.

With particular reference to Figure 4, each sealing assembly 27, preferentially each respective second operative group 46, more preferably each counter-sealing element 47, may comprise respective seats 49 for each sensor 35.

Advantageously, each sensor 35 may be at least partially arranged within a cover 50.

According to some preferred non-limiting embodiments, each forming shell assembly may at least comprise a first half-shell (not shown and known as such) and a second half-shell (not shown and known as such) configured to at least partially define in cooperation with one another the shape of packages 2. Preferentially, each first half-shell and the respective second half-shell may be configured to contact tube 4 from opposite sides thereof.

According to some preferred non-limiting embodiments one of the first half-shell and second half-shell may be coupled to first operative group 44 and the other one of the first half-shell and the second half-shell may be coupled to second operative group 45.

According to some preferred non-limiting embodiments one of the first half-shell and second half-shell may be coupled to sealing element 46 and the other one of the first half-shell and the second half-shell may be coupled to counter-sealing element 47.

In use, packaging machine 1 produces packages 2 filled with the pourable product.

In more detail, conveying device 11 advances web 3 along web advancement path P to forming station 8. Tube forming and sealing device 12 forms tube 4 from the advancing web 3 and longitudinally seals tube 4. Additionally, filling device 13 fills tube 4 with the pourable product and package forming apparatus 10 forms, transversally seals and transversally cuts tube 4 so as to obtain packages 2.

In further detail, during operation of package forming apparatus 10, operative devices 25 transversally seal and cut tube 4, preferentially through the respective transversal main sealing band, for obtaining respective filled packages 2. Preferentially, operative devices 25 also form tube 4.

Preferentially, during transversal cutting, the respective cutting element 29 moves from the respective retracted position to the respective extracted position. Afterwards, the respective cutting element 29 moves back to the respective retracted position.

Moreover, each sensor device 31, preferentially each sensor 35, measures the relative distance from the respective surface 32 and/or detects the at least one position of the respective surface 32. In this way, sensor device 31 and/or the control unit are able to determine whether the respective cutting elements 29 has returned to the respective retracted position or not.

In the case that one or more cutting elements 29 do not return to the respective retracted position, the control unit can issue an alarm signal and/or may interrupt production.

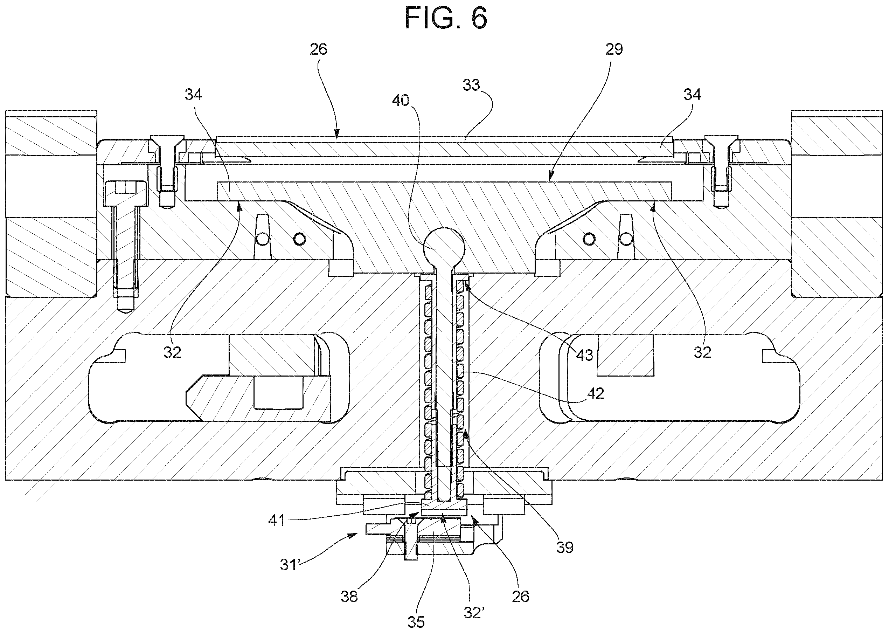

With reference to Figure 6, number 31' indicates an alternative sensor device of a packaging machine according to the present invention; as sensor device 31' is similar to sensor device 31, the following description is limited to the differences between them, and using the same references, where possible, for identical or corresponding parts.

In particular, sensor device 31' differs from sensor device 31 in that each sensor device 31', preferentially at least one respective sensor 35, may be configured to measure the relative distance between the respective surface 32' of the respective bar 38 and sensor device 31' and/or detect at least one position of the respective surface 32'.

In this way, the control unit may be configured to determine whether the respective cutting element 29 is in the retracted position or not in dependence of the detected at least one position of the respective surface 32' and/or in dependence of the measured relative distance between the respective surface 32' of the respective bar 38 and sensor device 31. The position of the respective cutting element 29 is correlated with the at least one position of surface 32' of the respective bar 38 as the respective bar 38 moves together with the respective cutting element 29.

Preferentially, each second end 41 may comprise the respective surface 32'. Even more preferentially, a respective end face of second end 41 may define the respective surface 32'.

According to some possible non-limiting embodiments not shown, each sensor device 31' and/or the control unit may also be configured to determine respective relative distances with regard to respective surfaces 32 of the respective cutting element 29, preferentially the respective auxiliary edge 34.

More specifically, each sensor device 31' may also comprise respective sensors 35 configured to determine the relative distance from respective surfaces 32, in particular in a manner as disclosed with respect to the embodiment of Figures 3a to 5.

Additionally, each sensor device 31' and/or the control unit may also be configured to determine whether or not the respective cutting element 29 is in and/or has returned to the respective retracted position in dependence of the respective relative distance from the one or more surface 32 and to surface 32'.

As operation of packaging machine 1 having operative devices 25 provided with cutting assemblies 26' is similar to the operation of packaging machine 1 having operative devices 25 provided with cutting assemblies 26, we refer to the above-provided description.

The advantages of packaging machine 1 according to the present invention will be clear from the foregoing description.

In particular, by relying on sensor devices 31 and sensor devices 31' it is possible to reduce or even eliminate the risk of a cutting element 29 damaging tube 4.

Clearly, changes may be made to packaging machine 1 as described herein without, however, departing from the scope of protection as defined in the accompanying claims.

## Claims

1. Package forming apparatus (10) for a packaging machine (1) and being configured to at least transversally seal and transversally cut a tube (4) for obtaining packages (2) ;
wherein the package forming apparatus (10) comprises at least one operative device (25) configured to transversally seal and cut the tube (4);
wherein the at least one operative device (25) comprises at least one cutting assembly (26) having a cutting element (29) configured to transversally cut the tube (4);
wherein the cutting element (29) is moveable between a retracted position and an extracted position;
wherein the cutting element (29) moves, in use, from the retracted position to the extracted position for transversally cutting the tube (4) and back from the extracted position to the retracted position so as to retract the cutting element (29) from the tube (4);
**characterised in that**
the package forming apparatus (10) further comprises at least one sensor device (31, 31') configured to measure the relative distance between at least one surface (32, 32') of the cutting element (29) and the at least one sensor device (31, 31') and/or to detect at least one position of the at least one surface (32, 32') so as to determine whether the cutting element (29) is in and/or has returned to the retracted position in dependence of the measured relative distance and/or the detected at least one position.

2. Package forming apparatus according to claim 1, wherein the sensor device (31, 31') and/or the control unit are configured to determine whether the cutting element (29) reaches the retracted position during its movement from the extracted position to the retracted position;
wherein the control unit is configured to issue an alarm signal and/or to interrupt the operation of the package forming apparatus (10) if the sensor device (31, 31') and/or the control unit determine, in use, that the cutting element (29) has not reached the retracted position during its movement from the extracted position to the retracted position.

3. Package forming apparatus according to claim 1 or 2, wherein the sensor device (31, 31') comprises at least one sensor (35) configured to measure the relative distance between the surface (32, 32') and the at least one sensor (35), and/or to detect the at least one position of the surface (32, 32').

4. Package forming apparatus according to claim 3, wherein the sensor device (31, 31') comprises at least two sensors (35), each configured to measure the relative distance between a respective surface (32) of the cutting assembly (26) and the respective sensor (35), and/or to detect the at least one position of a respective surface (32, 32'), the two respective surfaces (32) being different from one another;
wherein the sensor device (31, 31') is configured to determine, in use, whether the cutting element (29) is in the retracted position based on each relative distance measured by the at least two sensors (35) and/or each at least one position detected by the at least two sensors (35).

5. Package forming apparatus according to any one of the preceding claims, wherein the sensor device (31, 31') comprises at least one proximity sensor (35).

6. Package forming apparatus according to any one of the preceding claims, wherein the cutting element (29) comprises at least a cutting edge (33) configured to transversally cut the tube (4) and an auxiliary edge (34) opposite to the cutting edge (33);
wherein the auxiliary edge (34) comprises the surface (32) and the sensor device (31, 31') is configured to measure the relative distance between the surface (32) of the auxiliary edge (34) and the sensor device (31. 31') and/or to detect the at least one position of the surface (32) of the auxiliary edge (34).

7. Package forming apparatus according to claim 6, wherein the cutting element (29) extends along a main axis (B) ;
wherein the sensor device (31, 31') comprises at least two sensors (35) spaced apart from one another along a direction parallel to the main axis (B);
wherein each sensor (35) is configured to determine the relative distance between the sensor (35) and the respective surface (32) of the auxiliary edge (34);
wherein the sensor device (31, 31') is configured to determine, in use, whether the cutting element (29) is in the retracted position based on the relative distances determined by the at least two sensors (35).

8. Package forming apparatus according to any one of the preceding claims, wherein the cutting assembly (26) comprises a bar (38) fixed to the cutting element (29);
wherein the bar (38) moves, in use, together with the cutting element (29);
wherein the bar (38) comprises the surface (32') and the sensor device (31') is configured to determine whether the cutting element (29) is in the retracted position in dependence of the relative distance of the sensor device (31') and the surface (32') and/or the at least one position of the surface (32').

9. Package forming apparatus according to any one of the preceding claims, wherein the operative device (25) comprises a housing seat (30);
wherein the cutting element (29) is fully arranged within the housing seat (30) when being in the retracted position and at least partially extends from the housing seat (30) when being in the extracted position.

10. Package forming apparatus according to any one of the preceding claims, wherein the operative device (25) comprises at least a first operative group (44) and a second operative group (45) configured to cooperate with the first operative group (44) so as to transversally seal and cut the tube (4);
wherein one of the first operative group (44) and the second operative group (45) comprises and/or carries the cutting element (29).

11. Package forming apparatus according to claim 10, wherein the first operative group (44) comprises and/or carries a sealing element (46) and the second operative group (45) comprises a counter-sealing element (47);
wherein the sealing element (46) and the counter-sealing element (47) are configured to engage the tube (4) from opposite sides thereof so as to transversally compress the tube (4) and to transversally seal the tube (4).

12. Package forming apparatus according to claim 11, wherein the second operative group (45) comprises and/or carriers the cutting element (29);
wherein the sealing element (46) comprises a groove configured to receive a portion of the cutting element (29) with the cutting element (29) being in the extracted position.

13. Package forming apparatus according to any one of claims 10 to 12, and further comprising a conveying unit configured to advance the first operative group (44) and the second operative group (45) along respective operative portions of the respective advancement paths;
wherein the first operative group (44) and the second operative group (46) are configured to cooperate with one another for transversally sealing and cutting the tube (4) when advancing along the respective operative portions.

14. Packaging machine (1) for forming packages (2) of a pourable product from an advancing tube (4) formed and longitudinally sealed from a web of packaging material (4);
the packaging machine (1) comprises:
- a conveying device (11) configured to advance the web of packaging material (3) along a web advancement path (P) and for advancing the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to any one of the preceding claims.

15. Packaging machine according to claim 14, further comprising an isolation chamber (14);
wherein the tube forming and sealing device (12) is at least partially arranged within the isolation chamber (14) and configured to form and longitudinally seal the tube (4) within the isolation chamber (14).

## Patentansprüche

1. Verpackungsbildungseinrichtung (10) für eine Verpackungsmaschine (1) und die dazu ausgelegt ist, einen Schlauch (4) zum Erhalten von Verpackungen (2) zumindest transversal zu versiegeln und transversal zu schneiden; wobei die Verpackungsbildungseinrichtung (10) mindestens eine operative Vorrichtung (25) umfasst, die dazu ausgelegt ist, den Schlauch (4) transversal zu versiegeln und zu schneiden;
wobei die mindestens eine operative Vorrichtung (25) mindestens eine Schneidbaugruppe (26) mit einem Schneidelement (29) umfasst, das dazu ausgelegt ist, den Schlauch (4) transversal zu schneiden;
wobei das Schneidelement (29) zwischen einer zurückgezogenen Position und einer ausgezogenen Position beweglich ist;
wobei sich das Schneidelement (29) im Gebrauch von der zurückgezogenen Position in die ausgezogene Position zum transversalen Schneiden des Schlauchs (4) und von der ausgezogenen Position zurück in die zurückgezogene Position bewegt, um das Schneidelement (29) von dem Schlauch (4) zurückzuziehen;
**dadurch gekennzeichnet, dass** die Verpackungsbildungseinrichtung (10) ferner mindestens eine Sensorvorrichtung (31, 31') umfasst, die dazu ausgelegt ist, den relativen Abstand zwischen mindestens einer Oberfläche (32, 32') des Schneidelements (29) und der mindestens einen Sensorvorrichtung (31, 31') zu messen und/oder mindestens eine Position der mindestens einen Oberfläche (32, 32') zu detektieren, um in Abhängigkeit von dem gemessenen relativen Abstand und/oder der detektierten mindestens einen Position zu bestimmen, ob sich das Schneidelement (29) in der zurückgezogenen Position befindet und/oder in diese zurückgekehrt ist.

2. Verpackungsbildungseinrichtung nach Anspruch 1, wobei die Sensorvorrichtung (31, 31') und/oder die Steuereinheit dazu ausgelegt sind, zu bestimmen, ob das Schneidelement (29) während seiner Bewegung von der ausgezogenen Position in die zurückgezogene Position die zurückgezogene Position erreicht;
wobei die Steuereinheit dazu ausgelegt ist, ein Alarmsignal auszugeben und/oder den Betrieb der Verpackungsbildungseinrichtung (10) zu unterbrechen, falls die Sensorvorrichtung (31, 31') und/oder die Steuereinheit im Gebrauch bestimmen, dass das Schneidelement (29) während seiner Bewegung von der ausgezogenen Position in die zurückgezogene Position die zurückgezogene Position nicht erreicht hat.

3. Verpackungsbildungseinrichtung nach Anspruch 1 oder 2, wobei die Sensorvorrichtung (31, 31') mindestens einen Sensor (35) umfasst, der dazu ausgelegt ist, den relativen Abstand zwischen der Oberfläche (32, 32') und dem mindestens einen Sensor (35) zu messen und/oder die mindestens eine Position der Oberfläche (32, 32') zu detektieren.

4. Verpackungsbildungseinrichtung nach Anspruch 3, wobei die Sensorvorrichtung (31, 31') mindestens zwei Sensoren (35) umfasst, die jeweils dazu ausgelegt sind, den relativen Abstand zwischen einer jeweiligen Oberfläche (32) der Schneidbaugruppe (26) und dem jeweiligen Sensor (35) zu messen und/oder die mindestens eine Position einer jeweiligen Oberfläche (32, 32') zu detektieren, wobei die zwei jeweiligen Oberflächen (32) voneinander unterschiedlich sind;
wobei die Sensorvorrichtung (31, 31') dazu ausgelegt ist, im Gebrauch basierend auf jedem durch die mindestens zwei Sensoren (35) gemessenen relativen Abstand und/oder jeder durch die mindestens zwei Sensoren (35) detektierten mindestens einen Position zu bestimmen, ob sich das Schneidelement (29) in der zurückgezogenen Position befindet.

5. Verpackungsbildungseinrichtung nach einem der vorhergehenden Ansprüche, wobei die Sensorvorrichtung (31, 31') mindestens einen Näherungssensor (35) umfasst.

6. Verpackungsbildungseinrichtung nach einem der vorhergehenden Ansprüche, wobei das Schneidelement (29) mindestens eine Schneidkante (33), die dazu ausgelegt ist, den Schlauch (4) transversal zu schneiden, und eine Hilfskante (34) gegenüber der Schneidkante (33) umfasst; wobei die Hilfskante (34) die Oberfläche (32) umfasst und die Sensorvorrichtung (31, 31') dazu ausgelegt ist, den relativen Abstand zwischen der Oberfläche (32) der Hilfskante (34) und der Sensorvorrichtung (31, 31') zu messen und/oder die mindestens eine Position der Oberfläche (32) der Hilfskante (34) zu detektieren.

7. Verpackungsbildungseinrichtung nach Anspruch 6, wobei sich das Schneidelement (29) entlang einer Hauptachse (B) erstreckt;
wobei die Sensorvorrichtung (31, 31') mindestens zwei Sensoren (35) umfasst, die entlang einer Richtung parallel zur Hauptachse (B) voneinander beabstandet sind; wobei jeder Sensor (35) dazu ausgelegt ist, den relativen Abstand zwischen dem Sensor (35) und der jeweiligen Oberfläche (32) der Hilfskante (34) zu bestimmen;
wobei die Sensorvorrichtung (31, 31') dazu ausgelegt ist, im Gebrauch basierend auf den durch die mindestens zwei Sensoren (35) bestimmten relativen Abständen zu bestimmen, ob sich das Schneidelement (29) in der zurückgezogenen Position befindet.

8. Verpackungsbildungseinrichtung nach einem der vorhergehenden Ansprüche, wobei die Schneidbaugruppe (26) eine Stange (38) umfasst, die an dem Schneidelement (29) befestigt ist;
wobei sich die Stange (38) im Gebrauch zusammen mit dem Schneidelement (29) bewegt;
wobei die Stange (38) die Oberfläche (32') umfasst und die Sensorvorrichtung (31') dazu ausgelegt ist, in Abhängigkeit von dem relativen Abstand der Sensorvorrichtung (31') und der Oberfläche (32') und/oder der mindestens einen Position der Oberfläche (32') zu bestimmen, ob sich das Schneidelement (29) in der zurückgezogenen Position befindet.

9. Verpackungsbildungseinrichtung nach einem der vorhergehenden Ansprüche, wobei die operative Vorrichtung (25) einen Gehäusesitz (30) umfasst;
wobei das Schneidelement (29) vollständig innerhalb des Gehäusesitzes (30) angeordnet ist, wenn es sich in der zurückgezogenen Position befindet, und sich zumindest teilweise von dem Gehäusesitz (30) erstreckt, wenn es sich in der ausgezogenen Position befindet.

10. Verpackungsbildungseinrichtung nach einem der vorhergehenden Ansprüche, wobei die operative Vorrichtung (25) mindestens eine erste operative Gruppe (44) und eine zweite operative Gruppe (45) umfasst, die dazu ausgelegt ist, mit der ersten operativen Gruppe (44) zusammenzuwirken, um den Schlauch (4) transversal zu versiegeln und zu schneiden;
wobei eine der ersten operativen Gruppe (44) und der zweiten operativen Gruppe (45) das Schneidelement (29) umfasst und/oder trägt.

11. Verpackungsbildungseinrichtung nach Anspruch 10, wobei die erste operative Gruppe (44) ein Versiegelungselement (46) umfasst und/oder trägt und die zweite operative Gruppe (45) ein Gegenversiegelungselement (47) umfasst;
wobei das Versiegelungselement (46) und das Gegenversiegelungselement (47) dazu ausgelegt sind, den Schlauch (4) von gegenüberliegenden Seiten davon in Eingriff zu nehmen, um den Schlauch (4) transversal zusammenzudrücken und den Schlauch (4) transversal zu versiegeln.

12. Verpackungsbildungseinrichtung nach Anspruch 11, wobei die zweite operative Gruppe (45) das Schneidelement (29) umfasst und/oder trägt;
wobei das Versiegelungselement (46) eine Nut umfasst, die dazu ausgelegt ist, einen Abschnitt des Schneidelements (29) aufzunehmen, wenn sich das Schneidelement (29) in der ausgezogenen Position befindet.

13. Verpackungsbildungseinrichtung nach einem der Ansprüche 10 bis 12, und ferner umfassend eine Fördereinheit, die dazu ausgelegt ist, die erste operative Gruppe (44) und die zweite operative Gruppe (45) entlang jeweiliger operativer Abschnitte der jeweiligen Vorschubwege vorzuschieben;
wobei die erste operative Gruppe (44) und die zweite operative Gruppe (46) dazu ausgelegt sind, zum transversalen Versiegeln und Schneiden des Schlauchs (4) miteinander zusammenzuwirken, wenn sie entlang der jeweiligen operativen Abschnitte vorgeschoben werden.

14. Verpackungsmaschine (1) zum Bilden von Verpackungen (2) eines gießfähigen Produkts aus einem sich vorschiebenden Schlauch (4), der aus einer Bahn von Verpackungsmaterial (4) gebildet und in Längsrichtung versiegelt ist;
wobei die Verpackungsmaschine (1) Folgendes umfasst:
- eine Fördervorrichtung (11), die dazu ausgelegt ist, die Bahn von Verpackungsmaterial (3) entlang eines Bahnvorschubwegs (P) vorzuschieben und den Schlauch (4) entlang eines Schlauchvorschubwegs (Q) vorzuschieben;
- eine Schlauchbildungs- und - versiegelungsvorrichtung (12), die dazu ausgelegt ist, den Schlauch (4) aus der Bahn von Verpackungsmaterial (3) zu bilden und den Schlauch (4) in Längsrichtung zu versiegeln;
- eine Füllvorrichtung (13) zum Füllen des Schlauchs (4) mit dem gießfähigen Produkt; und
- eine Verpackungsbildungseinrichtung (10) nach einem der vorhergehenden Ansprüche.

15. Verpackungsmaschine nach Anspruch 14, die ferner eine Isolationskammer (14) umfasst;
wobei die Schlauchbildungs- und - versiegelungsvorrichtung (12) zumindest teilweise innerhalb der Isolationskammer (14) angeordnet und dazu ausgelegt ist, den Schlauch (4) innerhalb der Isolationskammer (14) zu bilden und in Längsrichtung zu versiegeln.

## Revendications

1. Appareil de formage d'emballages (10) pour une machine d'emballage (1) et configuré pour au moins sceller transversalement et couper transversalement un tube (4) pour obtenir des emballages (2) ;
dans lequel l'appareil de formage d'emballages (10) comprend au moins un dispositif opérationnel (25) configuré pour sceller et couper transversalement le tube (4) ;
dans lequel l'au moins un dispositif opérationnel (25) comprend au moins un ensemble de coupe (26) ayant un élément de coupe (29) configuré pour couper transversalement le tube (4) ;
dans lequel l'élément de coupe (29) est mobile entre une position rétractée et une position extraite ;
dans lequel l'élément de coupe (29) se déplace, en cours d'utilisation, de la position rétractée à la position extraite pour couper transversalement le tube (4), puis en retour de la position extraite à la position rétractée de manière à rétracter l'élément de coupe (29) à partir du tube (4) ;
**caractérisé en ce que** l'appareil de formage d'emballages (10) comprend en outre au moins un dispositif capteur (31, 31') configuré pour mesurer la distance relative entre au moins une surface (32, 32') de l'élément de coupe (29) et l'au moins un dispositif capteur (31, 31') et/ou pour détecter au moins une position de l'au moins une surface (32, 32') de manière à déterminer si l'élément de coupe (29) est dans et/ou est revenu à la position rétractée en fonction de la distance relative mesurée et/ou de l'au moins une position détectée.

2. Appareil de formage d'emballages selon la revendication 1, dans lequel le dispositif capteur (31, 31') et/ou l'unité de commande sont configurés pour déterminer si l'élément de coupe (29) atteint la position rétractée pendant son déplacement de la position extraite à la position rétractée ;
dans lequel l'unité de commande est configurée pour émettre un signal d'alarme et/ou pour interrompre le fonctionnement de l'appareil de formage d'emballages (10) si le dispositif capteur (31, 31') et/ou l'unité de commande déterminent, en cours d'utilisation, que l'élément de coupe (29) n'a pas atteint la position rétractée pendant son déplacement de la position extraite à la position rétractée.

3. Appareil de formage d'emballages selon la revendication 1 ou 2, dans lequel le dispositif capteur (31, 31') comprend au moins un capteur (35) configuré pour mesurer la distance relative entre la surface (32, 32') et l'au moins un capteur (35), et/ou pour détecter l'au moins une position de la surface (32, 32').

4. Appareil de formage d'emballages selon la revendication 3, dans lequel le dispositif capteur (31, 31') comprend au moins deux capteurs (35), chacun configuré pour mesurer la distance relative entre une surface (32) respective de l'ensemble de coupe (26) et le capteur (35) respectif, et/ou pour détecter l'au moins une position d'une surface (32, 32') respective, les deux surfaces (32) respectives étant différentes l'une de l'autre ;
dans lequel le dispositif capteur (31, 31') est configuré pour déterminer, en cours d'utilisation, si l'élément de coupe (29) est dans la position rétractée sur la base de chaque distance relative mesurée par les au moins deux capteurs (35) et/ou de chacune de l'au moins une position détectée par les au moins deux capteurs (35).

5. Appareil de formage d'emballages selon l'une quelconque des revendications précédentes, dans lequel le système capteur (31, 31') comprend au moins un capteur de proximité (35).

6. Appareil de formage d'emballages selon l'une quelconque des revendications précédentes, dans lequel l'élément de coupe (29) comprend au moins un bord de coupe (33) configuré pour couper transversalement le tube (4) et un bord auxiliaire (34) opposé au bord de coupe (33) ;
dans lequel le bord auxiliaire (34) comprend la surface (32) et le dispositif capteur (31, 31') est configuré pour mesurer la distance relative entre la surface (32) du bord auxiliaire (34) et le dispositif capteur (31, 31') et/ou pour détecter l'au moins une position de la surface (32) du bord auxiliaire (34).

7. Appareil de formage d'emballages selon la revendication 6, dans lequel l'élément de coupe (29) s'étend le long d'un axe principal (B) ;
dans lequel le dispositif capteur (31, 31') comprend au moins deux capteurs (35) espacés l'un de l'autre le long d'une direction parallèle à l'axe principal (B) ;
dans lequel chaque capteur (35) est configuré pour déterminer la distance relative entre le capteur (35) et la surface (32) respective du bord auxiliaire (34) ;
dans lequel le dispositif capteur (31, 31') est configuré pour déterminer, en cours d'utilisation, si l'élément de coupe (29) est dans la position rétractée sur la base des distances relatives déterminées par les au moins deux capteurs (35).

8. Appareil de formage d'emballages selon l'une quelconque des revendications précédentes, dans lequel l'ensemble de coupe (26) comprend une barre (38) fixée à l'élément de coupe (29) ;
dans lequel la barre (38) se déplace, en cours d'utilisation, conjointement avec l'élément de coupe (29) ;
dans lequel la barre (38) comprend la surface (32') et le dispositif capteur (31') est configuré pour déterminer si l'élément de coupe (29) est dans la position rétractée en fonction de la distance relative du dispositif capteur (31') et de la surface (32') et/ou de l'au moins une position de la surface (32').

9. Appareil de formage d'emballages selon l'une quelconque des revendications précédentes, dans lequel le dispositif opérationnel (25) comprend un siège de logement (30) ;
dans lequel l'élément de coupe (29) est entièrement agencé à l'intérieur du siège de logement (30) lorsqu'il est dans la position rétractée et s'étend au moins partiellement à partir du siège de logement (30) lorsqu'il est dans la position extraite.

10. Appareil de formage d'emballages selon l'une quelconque des revendications précédentes, dans lequel le dispositif opérationnel (25) comprend au moins un premier groupe opérationnel (44) et un second groupe opérationnel (45) configuré pour coopérer avec le premier groupe opérationnel (44) de manière à sceller et couper transversalement le tube (4) ;
dans lequel l'un du premier groupe opérationnel (44) et du second groupe opérationnel (45) comprend et/ou porte l'élément de coupe (29).

11. Appareil de formage d'emballages selon la revendication 10, dans lequel le premier groupe opérationnel (44) comprend et/ou porte un élément de scellement (46) et le second groupe opérationnel (45) comprend un élément de contre-scellement (47) ;
dans lequel l'élément de scellement (46) et l'élément de contre-scellement (47) sont configurés pour mettre en prise le tube (4) depuis des côtés opposés de celui-ci de manière à comprimer transversalement le tube (4) et à sceller transversalement le tube (4).

12. Appareil de formage d'emballages selon la revendication 11, dans lequel le second groupe opérationnel (45) comprend et/ou porte l'élément de coupe (29) ;
dans lequel l'élément de scellement (46) comprend une rainure configurée pour recevoir une partie de l'élément de coupe (29) avec l'élément de coupe (29) dans la position extraite.

13. Appareil de formage d'emballages selon l'une quelconque des revendications 10 à 12, et comprenant en outre une unité d'acheminement configurée pour faire avancer le premier groupe opérationnel (44) et le second groupe opérationnel (45) le long de parties opérationnelles respectives des chemins d'avancement respectifs ;
dans lequel le premier groupe opérationnel (44) et le second groupe opérationnel (46) sont configurés pour coopérer l'un avec l'autre pour sceller et couper transversalement le tube (4) lors de l'avancement le long des parties opérationnelles respectives.

14. Machine d'emballage (1) pour former des emballages (2) d'un produit fluide à partir d'un tube d'avancement (4) formé et scellé longitudinalement à partir d'une bande de matériau d'emballage (4) ;
la machine d'emballage (1) comprenant :
- un dispositif d'acheminement (11) configuré pour faire avancer la bande de matériau d'emballage (3) le long d'un chemin d'avancement de bande (P) et pour faire avancer le tube (4) le long d'un chemin d'avancement de tube (Q) ;
- un dispositif de formage et de scellement de tube (12) configuré pour former le tube (4) à partir de la bande de matériau d'emballage (3) et pour sceller longitudinalement le tube (4) ;
- un dispositif de remplissage (13) pour remplir le tube (4) avec le produit fluide ; et
- un appareil de formage d'emballage (10) selon l'une quelconque des revendications précédentes.

15. Machine d'emballage selon la revendication 14, comprenant en outre une chambre d'isolation (14) ;
dans laquelle le dispositif de formage et de scellement de tube (12) est agencé au moins partiellement à l'intérieur de la chambre d'isolation (14) et configuré pour former et sceller longitudinalement le tube (4) à l'intérieur de la chambre d'isolation (14).
